# EUROPEAN PATENT APPLICATION

(11) **EP 3 933 192 A1**
(43) Date of publication of application: **05.01.2022**
(21) Application number: 20183627.7
(22) Date of filing: 02.07.2020
(51) Int. Cl.: F03D 13/10, B63B 35/00, B63B 77/10, F03D 13/25, F03D 13/40

(54) **TOWING OF A FLOATING WIND TURBINE**

(71) Applicant: Siemens Gamesa Renewable Energy A/S, 7330 Brande (DK)
(72) Inventor: Esbensen, Thomas, 7400 Herning (DK); Hoegh, Gustav, 7100 Vejle (DK); Laugesen, Kasper, 6700 Esbjerg (DK)
(74) Representative: Aspacher, Karl-Georg

(57) **Abstract**

It is described a control system (170) for stabilizing a floating wind turbine (100), the control system (170) being connected to at least one sensor (271, 272, 273, 274) and at least one actuator (281, 282) of the floating wind turbine (100) and configured for:
determining a difference (231) between the floater orientation and a predefined desired floater orientation of the floating wind turbine (100) during towing of the floating wind turbine (100),
actuating the at least one actuator (150, 283) during towing of the floating wind turbine (100) for changing the floater orientation of the wind turbine to minimize said difference (231).

## Description

### Field of invention

The present invention relates to a floating wind turbine including a control system for stabilizing the floating wind turbine during towing. Further, the present invention relates to a method for stabilizing a floating wind turbine during towing.

### Art Background

In the technical field of floating wind turbines, it is known that floating wind turbines may be subject to additional motions due to additional degrees of freedom compared to conventional wind turbines particularly during towing.

The tow of a floating wind turbine is a complex and critical phase of the installation of floating wind turbines. Weather conditions frequently cause delays in installation process having a direct effect on the cost through standby fees of installation crews. This phase is particularly complex because a floating wind turbine is wave and wind sensitive and may experience large and violent motions in all degree of freedoms during the tow out phase. This may lead to dangerous situations both for the turbine, but also for the crew responsible for the tow out of the floating wind turbine. Any floating wind turbine which is stable during the tow out avoids the high cost of special purpose ships to carry and place the turbine on site. This may reduce the life cycle costs if major turbine retrofits, long term maintenance or decommissioning is needed.

Most floating turbines are not self-stable during the tow out phase due to not being in its intended installation configuration. For instance, spar-buoy floating wind turbine concepts achieve its stability from having the centre of gravity below the centre of buoyancy, which is a feature which is very hard to fulfil during the tow out. On the other hand, tension leg platforms achieve their stability through the tensioned mooring lines, which however is only present after the final installation. Weather window tolerance is the ability of a floating wind turbine to be towed out and installed in a broad range of weather conditions. In general, the weather window tolerance is low for floating wind turbines and the window of opportunity is narrow.

The above problems may be solved in a passive way, i.e. by making the floating wind turbines substructure less wave sensitive combined with using small windows of opportunities, in which the weather conditions are suitable for the tow out. Furthermore, a lot of "safe houses" along the sail route may be provided. This in case of harsh weather the floating wind turbine can be sailed into a nearby harbour. Such solutions are not optimal, since they all imply high cost of the installation phase.

Hence, there may be a need to provide an active system which is able to stabilize the floating turbine during towing, thus increasing the window of opportunity by control actions, which mitigate the motions occurring due to waves and wind.

### Summary of the Invention

This need may be met by the subject matter according to the independent claims. Advantageous embodiments of the present invention are described by the dependent claims.

According to a first aspect of the invention there is provided a floating wind turbine comprising a control system. The floating wind turbine comprises at least one sensor for measuring at least one parameter associated with a floater orientation of the wind floating wind turbine and at least one actuator actuatable for changing the floater orientation of the floating wind turbine. The control system is connected to the at least one sensor and the at least one actuator and is configured for:
receiving the at least one parameter determining the floater orientation of the wind floating wind turbine during towing of the floating wind turbine,
determining a difference between the floater orientation and a predefined desired floater orientation of the floating wind turbine during towing of the floating wind turbine,
actuating the at least one actuator during towing of the floating wind turbine for changing the floater orientation of the wind turbine to minimize said difference.

The difference may comprise an offset and/or an oscillation. The described control system is based on the idea that a control system may be provided which may stabilize unwanted rotations and/or oscillating motions of the floating wind turbine during towing. Therefore, the floating wind turbine may be towed in a safe and optimal manner by stabilizing the floating turbine during towing, even when waves and wind conditions are not optimal. This further decrease the wear out on the foundation and turbine. The present invention may advantageously use the general control system, which is installed on the floating wind turbine for controlling the floating wind turbine operations. This would contribute to lower the levelized cost of energy (LCOE) as the installation phase would be more secure, more flexible, and more efficient.

A floating wind turbine comprises a floating foundation which may move. By a movement of the floating foundation the floating wind turbine mounted on the floating foundation moves correspondingly by orienting itself along a direction, which is defined as "floater orientation". The motion of the floating foundation respectively the motion of the floating wind turbine may be divided into six individual degrees of freedom, namely three translations, i.e. a surge, a sway and a heave, and three rotation angles, i.e. a floater roll, a floater pitch and a floater yaw. The floater orientation may be defined by one or more parameters, for example by one or more of floater roll, floater pitch and floater yaw.

Due to similarities in naming between the pitch of the blades and the pitch of the floating foundation, a clear distinction is made in this application by distinguishing between a floater pitch and a blade pitch. Floater pitch denotes a rotation of the floating foundation arounds its point of rotation and a blade pitch denotes a controlled pitching of the blades. Likewise, a floater yaw denotes a rotation of the floating foundation around its vertical axis (heave), and turbine yaw denotes a rotation of a nacelle. The floater roll denotes a rotation of the floating foundation around an axis perpendicular to both the vertical axis and the floater pitch axis.

During towing the floating wind turbine may be operated to produce electrical energy. Additionally or alternatively, the floating wind turbine may include another source of electrical energy, for example a battery, for powering the sensor(s), the actuator(s) and the control system.

The sensor provides the possibility to determine a difference between the floater orientation and a predefined desired floater orientation. The difference may include a fixed offset and an oscillatory motion. The difference may be a difference between the floater pitch angle and a predetermined floater pitch angle and/or a difference between the floater roll angle and a predetermined floater roll angle and/or a difference between the floater yaw angle and a predetermined floater yaw angle.

The predetermined floater pitch angle according to the present invention may denote a floater pitch angle which corresponds to a vertical alignment of the floating wind turbine. The vertical alignment may also denote an alignment deviating slightly from a vertical for ensuring that a rotor of the floating wind turbine is optimal positioned with respect to an incoming wind field and at the same time shear forces acting on a connection between the nacelle and the tower are deviated into the tower.

The predetermined floater yaw angle according to the present invention may denote a floater yaw angle which is adjusted such that the rotor of the floating wind turbine is aligned perpendicular to a wind direction of an incoming wind field.

The control system may identify when the difference exceeds a given threshold and may consequently actuate a respective actuation device for changing the floater orientation of the wind turbine to minimize said difference.

The sensor may continuously monitor the floater orientation, for example by continuously monitoring the floater pitch angle and/or the floater yaw angle and/or the floater roll angle.

According to exemplary embodiments of the present invention, the difference may be in the range of -10° to +10°, particularly -5° to +5°, more particularly -2° to +2°, even more particularly 0°. Consequently, the given threshold may have the values ±10°, ±5°, ±2° or 0°, respectively. The given threshold may correspond to a respective given value of the floater pitch angle and/or the floater yaw angle and/or the floater roll angle or the resultant vector of all rotations.

The threshold of the oscillating motion of the floater rotation angles according to the present invention may denote a value which characterizes an amount of oscillation which may still be acceptable for the floating wind turbine. However, if the oscillating motion of the floater angle exceeds the threshold, the oscillating motion of the floater pitch angle may be harmful for the floating wind turbine and/or for the tow-out process

According to embodiments of the invention, the sensor is mounted to a substructure of the floating wind turbine, particularly to a nacelle, a blade, a tower and/or a floating foundation.

Mounting the sensor on one substructure of the floating wind turbine may provide the possibility that a fast detection based on the detected value of the difference.

Mounting one respective sensor at more than one substructure of the floating wind turbine may provide the possibility of a precise detection of a value of the difference.

The substructure to which the sensor is mounted may be chosen based on which substructure is best indicative for the measured floater orientation.

Alternatively, the substructure to which the sensor is mounted may be chosen based on which is an optimal position for the chosen sensor. For example, a blade load sensor may preferably be mounted to a blade and hence to the rotor of the floating wind turbine.

According to exemplary embodiments of the present invention, the sensor(s) may be at least one of the group consisting of a spinner pressure sensor, a wind speed sensor, a wind direction sensor, a blade load sensor. The sensor(s) may be accelerometer(s) or inclination sensor(s) or wave radar(s). The accelerometer(s) and inclination sensor(s) may be already integrated in the wind turbine.

The spinner pressure sensor may detect a difference with the predetermined floater yaw angle, a difference with the predetermined floater pitch angle, an oscillating motion of the floater pitch angle and/or an oscillating motion of the floater pitch angle by measuring a pressure difference that changes as a function of a rotor azimuth angle.

Using the spinner pressure sensor may provide the possibility that an already integrated sensor may additionally provide values of the difference with the predetermined floater pitch angle and/or the difference with the predetermined floater yaw angle and/or the oscillating motion of the floater pitch angle and/or the oscillating motion of the floater yaw angle.

The wind speed sensor may detect a difference with the predetermined floater pitch angle and/or an oscillating motion of the floater pitch angle by measuring a change in the wind speed due to a turbine nacelle's movement.

Using the wind speed sensor may provide the possibility that an already integrated sensor may additionally provide values of the difference with the predetermined floater pitch angle and/or the oscillating motion of the floater pitch angle.

The wind direction sensor may detect a difference with the predetermined floater pitch angle and/or an oscillating motion of the floater pitch angle by measuring an incoming wind direction at a specific substructure of the floating wind turbine.

Using the wind direction sensor may provide the possibility that an already integrated sensor may additionally provide values of the difference with the predetermined floater pitch angle and/or the oscillating motion of the floater pitch angle.

The blade load sensor may detect a difference with the predetermined floater pitch angle and/or an oscillating motion of the floater pitch angle and/or a difference with the predetermined floater yaw angle and/or an oscillating motion of the floater yaw angle by measuring a blade load changing dependent on a certain alignment of the blade relatively to the incoming wind field and/or the inclination of the floating wind turbine.

Using the blade load sensor, which is already integrated in the wind turbine, may provide the possibility that a mapping of a floater yaw misalignment/oscillation and/or a floater pitch misalignment/oscillation may be providable. Therefore, a precise detection of the difference with the predetermined floater pitch angle and/or the predetermined floater yaw angle as well as an occurrence of the oscillating motion of the floater pitch angle and/or the oscillating motion of the floater yaw angle may be providable.

According to exemplary embodiments of the present invention, the actuator comprises the electric generator of the floating wind turbine.

To minimize the difference the generator could be controlled in such a way that it provides an up-righting moment in floater roll, achieved by an angular acceleration of the generator. If the floating turbine is tilting sideways in one direction the generator would rotate with an angular acceleration in the opposite direction such that a counter moment is generated. To such purpose the generator should be utilized as a motor, getting external power from either a battery or other power producing units, so that the rotor can do controlled rotations.

According to exemplary embodiments of the present invention, the actuator comprises the blade pitch system of the floating wind turbine.

The blade pitch system could be utilized introducing small perturbations in the blade pitch angles increasing/decreasing the drag on the blades, along with making small perturbations to the mass balance.

According to exemplary embodiments of the present invention, the actuator comprises an adjustable spoiler on a nacelle and/or an active blade add-on.

The adjustable spoiler may denote an aerofoil which may be adjusted dependent on the incoming wind field detected on the blade by the sensor.

Adjusting the aerofoil may provide the possibility that a contact surface of the nacelle and/or the blade and/or the tower may be enlarged such that a higher drag load acts on the nacelle and/or the blade and/or the tower. Therefore, the offset and/or the oscillating motion of the floater pitch angle and/or the floater yaw angle and/or floater roll angle may be adapted.

The active blade add-on may for example be an add-on which can be actively adjusted or activated dependent one the given conditions, i.e. active blade add-ons act on an input from a controller unit.

According to an exemplary embodiment of the present invention, the actuation device comprises an adjustable damper configured for damping a vibration of the floating wind turbine.

The vibration of the floating wind turbine may cause translational and/or rotational movements of the floating wind turbine which may cause a difference from the predefined desired floater orientation.

The adjustable damper may be configured such that the translational and/or rotational movements may be reduced and in the best case inhibited at all.

Additionally, the adjustable damper may influence, by influencing a damping of the vibration of the floating wind turbine, the oscillating motion of the floater pitch angle and/or the floater yaw angle and/or the floater roll angle.

According to an exemplary embodiment of the invention, the actuation device comprises a liquid damper, a mass damper and/or a vortex induced vibration brake.

The liquid damper may comprise a container in which a liquid may be filled in or emptied out dependent on the needed damping. The damping may be directly dependent on the mass of liquid present in the liquid damper. Preferably the liquid damper may work with sea water which is present around the floating wind turbine. The container may be fixed to the floating foundation. Further, the liquid damper may provide the possibility to have an actuation device which is easy and cheap to operate.

The mass damper may by adjustable such that dependent on the needed amount of damping the weight of the mass damper is changed. Furthermore, the mass damper may provide the possibility to have an easy actuation device.

The vortex induced vibration brake may provide the possibility to inhibit the floating wind turbine to lock into a vortex induced vibration locking frequency.

According to a further aspect of the invention there is provided a method for controlling the orientation of a floating wind turbine during towing. The method comprises:
determining a floater orientation of the wind floating wind turbine,
determining a difference between the floater orientation and a predefined desired floater orientation of the floating wind turbine during towing of the floating wind turbine,
actuating the at least one actuator during towing of the floating wind turbine for changing the floater orientation of the wind turbine to minimize said difference.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a floating wind turbine according to an exemplary embodiment of the present invention during towing.
- Figure 2: shows a more detailed view of the floating wind turbine of figure 1 in a first towing configuration.
- Figure 3: shows a more detailed view of the floating wind turbine of figure 1 in a second towing configuration.

### Detailed Description

The illustration in the drawings is schematic. It is noted that in different figures, similar or identical elements or features are provided with the same reference signs. In order to avoid unnecessary repetitions elements or features which have already been elucidated with respect to a previously described embodiment are not elucidated again at a later position of the description.

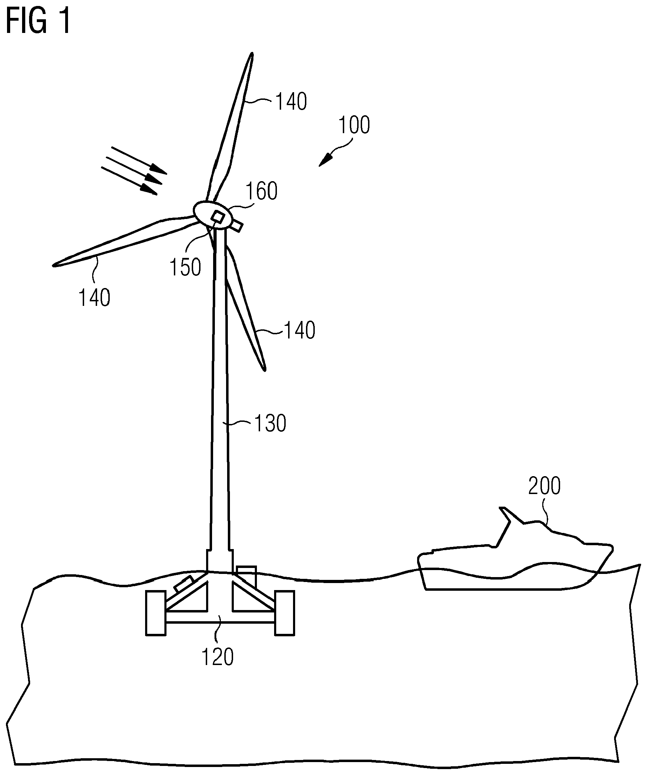

**Figure 1** shows a floating wind turbine 100 according to an exemplary embodiment of the present invention. The floating wind turbine 100 comprises three blades 140 mounted to a nacelle 160, a tower 130 and a floating foundation 120. The floating wind turbine 100 includes an electrical generator 150 inside the nacelle 160 for transforming the rotational energy of the three blades 140 into electrical energy. The floating wind turbine 100 is towed by a towing vessel 200.

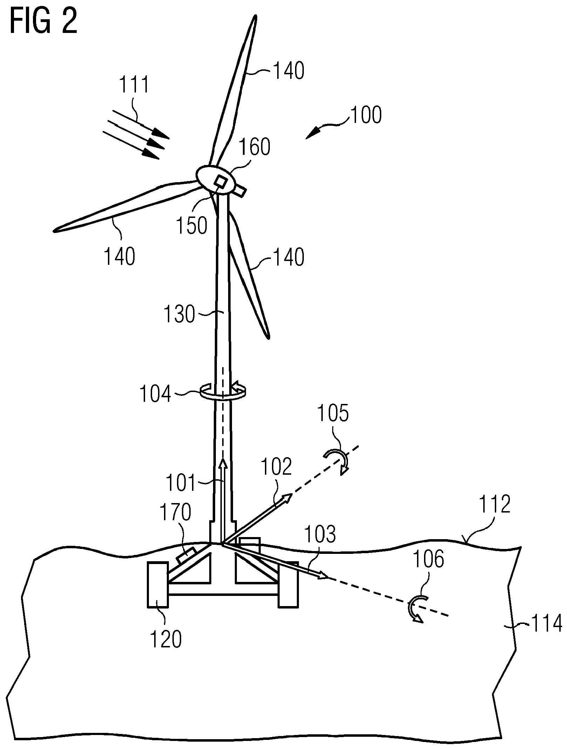

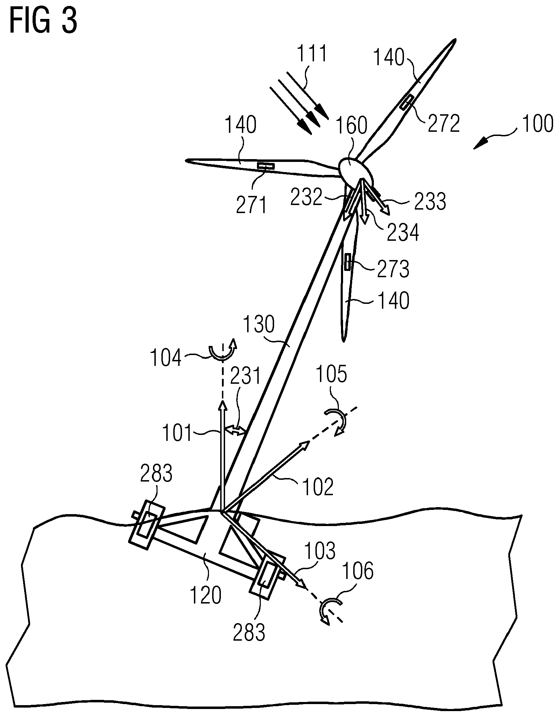

**Figures 2** and **3** show in more detail the floating wind turbine 100.

The floating wind turbine 100 has six individual degrees of freedom in which the floating wind turbine 100 may move. Namely, three translations, i.e. a surge 103, a sway 102 and a heave 101, and three rotation angles, i.e. a floater roll 106, a floater pitch 105 and a floater yaw 104. Furthermore, the floating wind turbine 100 is stabilized by a control system 170 mounted on the floating foundation 120. According to other embodiments of the present invention (not shown), the control system 170 may be mounted on another component of the floating wind turbine 100, for example the nacelle 160 or the tower 130. The alignment of the floating wind turbine 100 as shown in Figure 2 may illustrate a predefined desired floater orientation of the floating wind turbine 100. The predefined desired floater orientation may be defined by one or more angle values, for example one value of the floater roll 106 and/or a value of the floater pitch 105 and/or a value of the floater yaw 104. Consequently, the predefined desired floater orientation of the floating wind turbine 100 may be defined by a set of predefined desired floater roll 106, floater pitch 105 and floater yaw 104.

According to the configuration of figure 3, the floating wind turbine 100 is tilted around the floater pitch 105 axis such that a difference 231 to a predetermined desired floater pitch angle occurs. The difference 231 may comprise an offset and/or an oscillation. Additionally, the floating wind turbine 100 may tilted around the floater yaw 104 axis such that a difference to the predetermined desired floater yaw angle occurs. Additionally, the floating wind turbine 100 may tilted around the floater roll 106 axis such that a difference to the predetermined desired floater roll angle occurs. The floating wind turbine 100 is tilted by the difference 231 due to external forces due to an incoming wind field 111 acting on the three blades 140 of the floating wind turbine 100 or due to other external forces, for example tidal forces or ocean current forces.

A weight of the nacelle 160 together with the external forces composes a weight force 134, as shown in figure 3. The weight force 234 comprises a first force component 232 and a second force component 233. The first force component 232 is parallel to an extension direction of the tower 230 and the second force component 233 is perpendicular to the first force component 232.

The difference 231 may detected through a blade load sensor 271, a wind speed sensor 272 and a wind direction sensor 273 each mounted to one of the blades 140 or the nacelle 160.

Alternatively or additionally, the difference 231 may detected through an accelerometer and/or an inclination sensor and/or a wave radar mounted on any of the nacelle 160 and/or the blade 140 and/or the tower 130 and/or the floating foundation 120. The sensors 271, 272, 273, 274 measure respective parameters, which can be associated with the floater orientation of the floating wind turbine 100. For example, the measure parameters may be associate with a floater roll 106 and/or a floater pitch 105 and/or a floater yaw 104.

The control system 170 is connected to the sensors 271, 272, 273, 274 which may be present on the floating wind turbine 100 and, during towing of the floating wind turbine 100, receives the parameters measured by the sensors 271, 272, 273, 274 and determines the floater orientation of the floating wind turbine 100. The control system 170 further determines the difference 231 from a predefined desired floater orientation of the floating wind turbine 100. The control system 170 actuates one or more actuator 150, 283 for changing the floater orientation of the wind turbine to minimize said difference 231.

As actuation device the electric generator 150 of the floating wind turbine 100 may be used. Alternatively or additionally, the blade pitch system (not represented in the figures) may be used as actuation device. Other actuation devices may include an adjustable spoiler on a nacelle and/or an active blade add-on. Further or alternative actuation devices may include an adjustable damper configured for damping a vibration of the floating wind turbine 100.

As shown in figure 3, the actuation device may comprise a liquid damper 283 inside the floating foundation 120.

According to respective embodiments of the present invention, the difference may be in the range of -10° to +10°, particularly -5° to +5°, more particularly -2° to +2°. This means that the control system 170 may actuate the actuators 150, 283 when the difference 231 reaches a given threshold of ±10°, ±5°, ±2°, respectively. According to an embodiment of the present invention, the control system 170 may actuate the actuators 150, 283 each time a difference 231 greater than 0° is detected, in order to keep such difference at 0°.

It should be noted that the term "comprising" does not exclude other elements or steps and the use of articles "a" or "an" does not exclude a plurality. Also, elements described in association with different embodiments may be combined. It should also be noted that reference signs in the claims should not be construed as limiting the scope of the claims.

## Claims

1. A floating wind turbine (100) comprising:
at least one sensor (271, 272, 273, 274) for measuring at least one parameter associated with a floater orientation of the floating wind turbine (100),
at least one actuator (281, 282) actuatable for changing the floater orientation of the floating wind turbine (100),
a control system (170) connected to the at least one sensor (271, 272, 273, 274) and the at least one actuator (281, 282) and configured for:
receiving the at least one parameter determining the floater orientation of the wind floating wind turbine (100) during towing of the floating wind turbine (100),
determining a difference (231) between the floater orientation and a predefined desired floater orientation of the floating wind turbine (100) during towing of the floating wind turbine (100),
actuating the at least one actuator (150, 283) during towing of the floating wind turbine (100) for changing the floater orientation of the wind turbine to minimize said difference (231).

2. The floating wind turbine (100) according to claim 1, wherein the difference (231) between the floater orientation and the predefined desired floater orientation of the floating wind turbine (100) include an offset and/or an oscillation.

3. The floating wind turbine (100) according to claim 1 or 2, wherein the floater orientation comprises a floater roll angle (106) and/or a floater pitch angle (105) and/or a floater yaw angle (104).

4. The floating wind turbine (100) according to any of the previous claims, wherein the difference (231) is in the range of -10° to +10°, particularly -5° to +5°, more particularly - 2° to +2°, even more particularly 0°.

5. The floating wind turbine (100) according to any of the previous claims, wherein the sensor (271, 272, 273, 274) is mounted on a nacelle (160) and/or a blade (140) and/or a tower (130) and/or a floating foundation (120).

6. The floating wind turbine (100) according to any of the previous claims, wherein the sensor (271, 272, 273, 274) comprises at least one of the group consisting of a spinner pressure sensor, a wind speed sensor (272), a wind direction sensor (273), a blade load sensor (271).

7. The floating wind turbine (100) according to any of the previous claims, wherein the at least one sensor (271, 272, 273, 274) comprises an accelerometer or an inclination sensor or a wave radar.

8. The floating wind turbine (100) according to any of the previous claims, wherein the actuation device (150, 283) comprises an electric generator of the floating wind turbine (100).

9. The floating wind turbine (100) according to any of the previous claims, wherein the actuation device (150, 283) comprises a blade pitch system.

10. The floating wind turbine (100) according to any of the previous claims, wherein the actuation device (150, 283) comprises an adjustable spoiler on a nacelle and/or an active blade add-on.

11. The floating wind turbine (100) according to any of the previous claims, wherein the actuation device (150, 283) comprises an adjustable damper configured for damping a vibration of the floating wind turbine (100).

12. The floating wind turbine (100) according to any of the previous claims, wherein the actuation device (150, 283) comprises a liquid damper, a mass damper and/or a vortex induced vibration brake.

13. Method for controlling the orientation of a floating wind turbine (100) during towing, the method comprising:
determining a floater orientation of the wind floating wind turbine (100),
determining a difference (231) between the floater orientation and a predefined desired floater orientation of the floating wind turbine (100) during towing of the floating wind turbine (100),
actuating the at least one actuator (150, 283) during towing of the floating wind turbine (100) for changing the floater orientation of the wind turbine to minimize said difference (231).
